# EUROPEAN PATENT APPLICATION

(11) **EP 1 353 449 A1**
(43) Date of publication of application: **15.10.2003**
(21) Application number: 02715780.9
(22) Date of filing: 17.01.2002
(51) Int. Cl.: H04B 1/707, H04Q 7/38

(54) **PATH SEARCH METHOD AND PATH SEARCH DEVICE, AND MOBILE TERMINAL**

(30) Priority: 19.01.2001 JP 2001011500
(71) Applicant: Yozan Inc., Tokyo 155-0031 (JP)
(72) Inventor: SUZUKI, Kunihiko, c/o YOZAN INC., Tokyo 155-0031 (JP); CHEN, Xiao Yuan, c/o YOZAN INC., Tokyo 155-0031 (JP); ZHOU, Chang Ming, c/o YOZAN INC., Tokyo 155-0031 (JP)
(74) Representative: Grünecker, Kinkeldey, Stockmair & Schwanhäusser Anwaltssozietät
(86) International application number: JP0200280
(87) International publication number: WO02058265

(57) **Abstract**

By calculating the complex product between each of the complex conjugate pattern for the pilot patterns assigned individually to a plurality of transmitting antennas of a base station and de-spread signals (ISI, ISQ), which have been obtained from a received signal by de-spreading portion (22), a separating section (23) separates the pilot block of the de-spread signals, for each of the plurality of transmitting antennas, from the received signal. Subsequently, after a delay profile for the transmitted signal from each of the plurality of transmitting antennas is generated by using the separated signals (PLI₁, PLQ₁), (PLI₂, PLQ₂), a delay profile combining portion (27) combines into a delay-profile for multi-path selection, and multi-path selection is performed based on the delay profile for multi-path selection. Therefore, highly accurate path search is possible in a DS-CDMA system that employs a transmitter diversity scheme.

## Description

### TECHNICAL FIELD

The present invention relates to a path search method, a path search unit, and a mobile terminal, and more specifically to a path search method and a path search unit for performing a path-search based on a received signal, which is transmitted from a plurality of antennas in a base station, and a mobile terminal comprising the path search unit.

### BACKGROUND ART

Recently, Wideband-Code Division Multiple Access (W-CDMA) scheme, which uses Direct Spread- Code Division Multiple Access (DS-CDMA) scheme and in which spreading band-width is extend to 5 MHz, attracts attention in the field of mobile communication. In the DS-CDMA, a signal spread by using a spread code is transmitted from a base station and progresses from the base station to a mobile station such as a cellular phone or the like in an environmental condition in which a plurality of propagation paths (referred to as "multi-path") exist. Since propagation times via the propagation path vary depending on obstacles such as buildings or geographical features existing in the propagation path, the propagation times are different from each other. After the signal has propagated via the multi-path, it received by a mobile station such as a cellular phone or the like. Under the multi-path condition, a fading phenomenon happens, in which the level at the mobile station changes violently because the manner, caused by interference, between incoming waves varies depending on the movement of the mobile station.

Considering the multi-path fading, the mobile station detects receive timing for each path, referred to as "path-search". The mobile station performs RAKE-combining for the result of de-spreading the received signal based on the results of the path-search, and decodes the information included in the received signals with high accuracy.

On the other hand, it is known that the receiving characteristics at the mobile station under the multi-path circumstances are improved by the method of receiving antenna diversity in which a plurality of antennas are arranged at the mobile station, or the method of transmit diversity in which a plurality of antennas are arranged at the base station. Comparing the case that the antenna diversity receiving at the mobile station is employed and in case that the transmit diversity at the base station is employed, the circuit configuration in the mobile station is complicated when the antenna diversity receiving is employed, but it is expected that the circuit configuration is not complicated when the transmit diversity is employed. Therefore, it is studied at present to implement of the scheme of the transmit diversity at the base station.

As the transmit diversity, there are two types: one is a predetermined (PD) type in which a transmit pattern of data transmitted from the base station is predetermined; the other is a feedback (FB) type in which the transmit pattern is determined by the using selection information from the mobile station. As the PD type, TSTD (Time Switched Transmit Diversity) method, OTD (Orthogonal Transmit Diversity) method, and STTD (Space Time Transmit Diversity) method are proposed. These transmit diversity methods are disclosed in "S. Fukumoto, et al., Performance Evaluation of Forward Link Transmit Diversity, TECHNICAL REPORT OF IEICE, RCS99·12 (1999-04), pp. 31-36".

Even when the method of the transmit diversity as mentioned above is employed, the path-search at the mobile station must be performed. However, technologies for performing the path search without using the complicated circuit configuration are not practically proposed, when the method of the transmit diversity at the base station is employed.

The present invention was made in such circumstances, and the first purpose of the present invention is to provide a path search method and a path search unit for performing the path search with high accuracy in DS-CDMA system in which the transmit diversity method is employed.

Furthermore, the second purpose of the present invention is to provide a mobile terminal for performing the path search with high accuracy and communicating with high quality in DS-CDMA system in which the transmit diversity method is employed.

### DISCLOSURE OF INVENTION

According to the first aspect of this invention, there is provided a path search method for performing a path search based on received signals obtained by receiving a plurality of signals which include respective spread signal and are transmitted from a plurality of transmitting antennas to which complex type of pilot patterns are assigned individually, the pilot patterns being orthogonal respectively, said method comprising the steps of: de spreading the received signal based on a spreading code for generating a spread signal to obtain a de-spread signal; separating the de-spread signal into a plurality of signals, each of which includes a pilot block respectively corresponding to the transmitting antenna, by calculating a complex product between the de-spread signal and a complex conjugate pattern of each of the pilot patterns; generating delay profiles of the plurality of signals transmitted from the transmitting antennas based on the separated signals, respectively; combining into a delay profile for multi-path selection based on the generated delay profiles; and performing the multi-path selection based on the delay profile for the multi-path selection.

In this path search method, the de-spread signal is obtained by performing the de-spreading step, wherein the de-spread signal includes the pilot blocks and the pilot blocks are respectively corresponding to the transmitting antennas. In the separating step, the pilot blocks are separated by calculating the complex product between the de-spread signal and the complex conjugate pattern of each of the pilot patterns assigned the corresponding antennas respectively. Subsequently, in the delay profile generating step, the delay profiles of signals transmitted from the transmitting antennas are respectively generated by using the separated signals. In the delay profile combining step, the delay profile for multi-path selection is generated by using the generated delay profiles. Then, in performing the multi-path selection step, the multi-path selection is performed by using the delay profile for multi-path selection.

Accordingly, accurate path-search in DS-CDMA system, in which the transmit diversity method is employed, is performed by using the path search method of the present invention.

In the path search method of the present invention, either (a) or (b) may be employed as the pilot block (to be used in the path search): (a) the pilot block including at least a part of a dedicated pilot block included in each slot on a dedicated physical channel; (b) the pilot block including at least a part of a common pilot block included in each slot on a common pilot channel which is commonly used in every base station.

Further, a pattern including at least a part of the dedicated pilot block included in each slot on the dedicated physical channel and at least a part of the common pilot block included in each slot on a common pilot channel which are commonly used in every base station can be employed as the pilot block to be used in the path search.

In this case, (a) the delay profiles using the dedicated pilot block and the delay profiles using the common pilot block may be generated sequentially, and (b) the delay profiles using the dedicated pilot block and the delay profiles using the common pilot block may be generated in parallel.

In the path search method of the present invention, the delay profiles generating step may comprise the steps of: performing coherent-adding for amplitudes of an in-phase component in each of the separated signals at sampling points existing in a plurality of subsequent slots, and performing coherent-adding for amplitudes of a quadrature component in each of the separated signals at the sample points existing in the plurality of subsequent slots, the sampling points being periodically arranged at a symbol period in a plurality of pilot blocks; calculating signal power of result obtained by using the coherent-adding; calculating an average value of the signal power using the symbol period; and generating delay profile shapes based on the average value of the signal power. The multi-path selection performing step comprises the steps of: extracting sample positions, that is, phases at which the average value of the signal power is not less than a predetermined threshold value in the delay profile for the multi-path selection; and calculating path-phase information based on the extracted sample positions.

In this case, when the delay profile corresponding to each of the signals transmitted from the transmitting antennas is respectively generated, the coherent-adding for amplitudes of the in-phase component at sampling points is performed, wherein the in-phase component is included in each of the separated signals and the sampling points exists in the plurality of subsequent slots, and the coherent-adding for amplitudes of the quadrature component at the sampling points is performed, wherein the quadrature component is included in each of the separated signals. The sampling points are periodically arranged at symbol period in of the plurality of pilot blocks. As a result, background noise and interference component are decreased.

Subsequently, in the signal power calculating step, the signal power of the result obtained by using the coherent-adding is calculated by using the symbol period. Then, in the delay profile shape generating step, the delay profile shapes are generated, by using the calculated average value of the signal power.

Based on the generated delay profiles with high accuracy, the delay profile for the multi-path selection, which is commonly used to process the signals transmitted by the antennas, is synthesized in the combining step. Then, in the multi-path selecting step, the sample positions are extracted, at which the average value of the signal power is not less than a predetermined threshold value in the delay profile for the multi-path selection, and the information of path phase is calculated by using the extracted sample positions to perform the multi-path selection. As a result, highly accurate path search is performed.

In the path search method of the present invention, the delay profile generating step may comprise the steps of calculating signal powers at each of sampling points in the pilot block which exists in each of the separated signals; the sampling points being periodically arranged at a symbol period inside of a plurality of pilot blocks; calculating average value of the signal powers at the sampling points existing in a plurality of subsequent slots; and generating the delay profile shapes based on the average value of the signal powers. The multi-path selection performing step comprises the steps of: extracting sample positions at which the average value of the signal powers is not less than a predetermined threshold value in the delay profile for the multi-path selection; and calculating path-phase information based on the extracted sample positions.

According to the second aspect of the present invention, the present invention provides a path search unit for performing a path search based on received signals obtained by receiving a plurality of signals which include respective spread signals and are transmitted from a plurality of transmitting antennas to which pilot patterns are assigned individually, the pilot patterns being orthogonal with respect to each other, said unit comprising: de-spreading means for de-spreading the received signal based on a spread code for generating a spread signal to obtain a de-spread signal; separating means for separating the de-spread signal into a plurality of signals, each of which includes a pilot block respectively corresponding to the transmitting antenna, by calculating a complex product of the de-spread signal and complex conjugate pattern of each of the pilot patterns; delay profile generating means for generating delay profiles of said plurality of signals transmitted from the transmitting antennas using the separated signals, respectively; delay profile combining means for combining into a delay profile for multi-path selection based on the generated delay profiles; and multi-path selection means for performing the multi-path selection based on the delay profile for the multi-path selection.

In this path search unit, the separating means calculates the complex product of the de-spread signal and complex conjugate pattern of each of the pilot patterns assigned to the antennas individually. As the result of this calculation, the pilot blocks in the de-spread signal, which is obtained by using of the dispreading means, are separated. Subsequently, the delay profile generating means generates the delay profiles of signals, which are transmitted from the transmitting antennas, by using the separated signals. The delay profile combining means combine into the delay profile for multi-path selection based on the generated delay profiles. Then, the multi-path selection means conducts the multi-path selection based on the delay profile for multi-path selection.

Accordingly, the path-search with high precision in the DS-CDMA system, in which the transmit diversity method is employed, is performed by the path search unit of the present invention.

In the path search unit of the present invention, the delay profiles generating means may comprise: coherent-adding means for performing coherent-adding for amplitudes of an in-phase component in each of the separated signals at sampling points existing in a plurality of subsequent slots, and performing coherent-adding for amplitudes of a quadrature component in each of the separated signals at the sample points existing in the plurality of subsequent slots, the sampling points being periodically arranged at a symbol period in a plurality of pilot blocks; signal power calculating means for calculating a signal power of a result obtained by using the coherent-adding means; average calculating means for calculating an average value of the signal power by using the symbol period; and delay profile shape generating means for generating the delay profiles based on the average value of the signal power. The multi-path selection means may comprise: extracting means for extracting sample positions at which the average of the signal power is not less than a predetermined threshold value in the delay profile for the multi-path selection; and path-phase calculating means for calculating path-phase information based on the extracted sample positions.

In the path search unit of the present invention, the delay profile generating means may comprise: signal power calculating means for calculating signal powers at sampling points in the pilot block which is in each of the separated signals, the sampling points being periodically arranged at a symbol period in a plurality of pilot blocks; average calculating means for calculating an average of the signal powers at the sampling positions existing in a plurality of subsequent slots; and delay profile shape generating means for generating the delay profile based on the average value of the signal powers. The multi-path selection means comprises: extracting means for extracting sample positions at which the average value of the signal powers is not less than a predetermined threshold value in the delay profile for the multi-path selection; and path-phase calculating means for calculating path-phase information based on the extracted sample positions.

According to the third aspect of this invention, there is provided a mobile terminal comprising: receiving means for receiving signals transmitted from a base station; and a path search unit according to the present invention for performing a path search based on the signals received by the receiving means.

In the mobile terminal, the path search unit performs a path search accurately based on signals received by the receiving means. Then the mobile terminal performs RAKE-receiving to improve the quality of receiving signal processing based on the accurate result of the path search.

### BRIEF DESCRIPTION OF THE DRAWINGS

Fig. 1 is a schematic diagram showing the DS-CDMA system including the mobile terminal according to the first embodiment of this invention;
Fig. 2 shows radio frame structure for a downlink dedicated physical channel;
Fig. 3 shows a relation between a transmitting pattern from the first antenna and a transmitting pattern from the second antenna for the STTD scheme in the transmit diversity;
Fig. 4 shows a radio frame structure transmitted from a base station to the mobile terminal via the common pilot channel;
Figs. 5 shows relation between a transmitting pilot pattern on the common pilot channel from the first antenna and a transmitting pilot pattern of the common pilot pattern from the second antenna for the STTD scheme in the transmit diversity;
Fig. 6 is a block diagram showing configuration of the mobile terminal shown in Fig. 1;
Fig. 7 is a block diagram showing configuration of a base-band signal processing portion shown in Fig. 6;
Fig. 8 is a block diagram showing configuration of a path search portion shown in Fig. 7;
Fig. 9 is a block diagram showing configuration of a dispreading portion shown in Fig. 8;
Fig. 10 is a block diagram showing configuration of an in-phasing portion shown in Fig. 8;
Fig. 11 is a schematic diagram showing a power averaging process of a partial common pilot block in the first embodiment of the present invention;
Fig. 12 is a schematic diagram showing a power averaging process of a dedicated pilot block in the first embodiment of the present invention;
Fig. 13 is a block diagram showing configuration of a path search portion according to second embodiment of the invention;
Fig. 14 is a schematic diagram showing a power averaging process of a partial common pilot block in the second embodiment of the invention; and
Fig. 15 is a schematic diagram showing a power averaging process of a dedicated pilot block in the second embodiment of the invention.

### BEST MODE FOR CARRYING OUT THE INVENTION

### <First Embodiment>

First embodiment of the present invention will be described below with reference to attached figures.

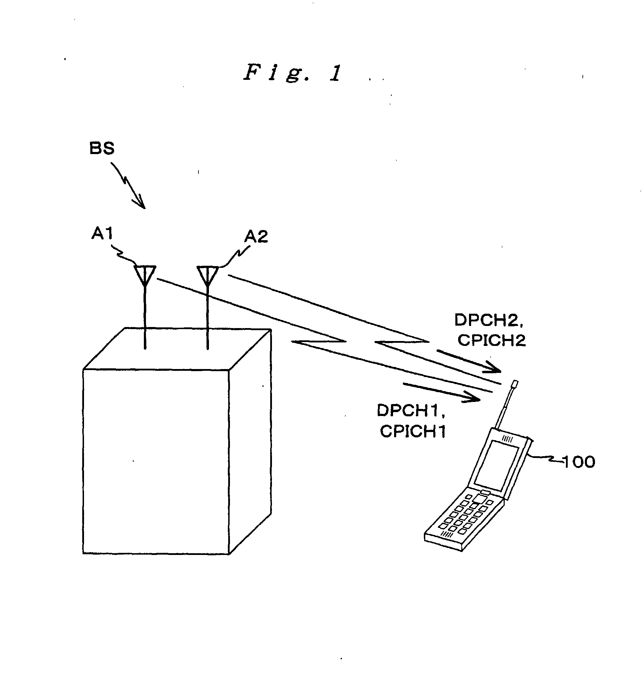

As shown in Fig. 1, the DS-CDMA system of the present invention, in which a cellular phone 100 is used as a mobile terminal, employs two transmitting antennas A1 and A2 in a base station BS. In the DS-CDMA system, transmit diversity having 2 branches is employed in transmitting radio signals from the base station BS to the cellular phone. Note that the above-mentioned STTD method is employed as the transmit diversity method in the embodiment of the present invention, and the DS-CDMA system employed in the present invention is in accordance with the standard for W-CDMA.

In the DS-CDMA system of this embodiment, predetermined channels including a dedicated physical channel (DPCH) and a common pilot channel (CPICH) are used as transmitting channels from the base station BS to the cellular phone 100. Since the dedicated physical channel is a bi-directional channel between the base station BS and the cellular phone 100, the transmitting channel of the dedicated physical channel from the base station BS to the cellular phone 100 is referred to as "downlink dedicated physical channel" in the following description.

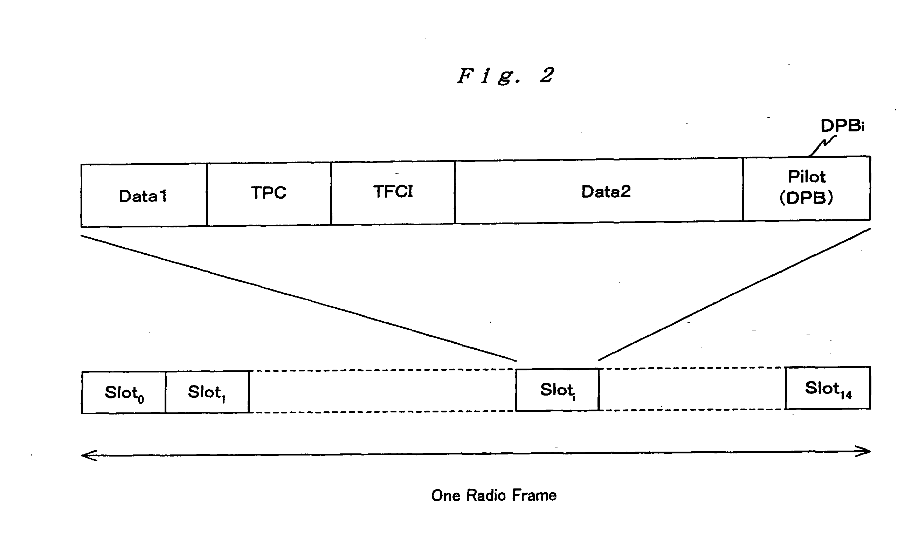

Each of the radio frames transmitted via the downlink dedicated physical channel from the base station BS to the cellular phone 100 consists of fifteen slots Slotᵢ (i= 0∼14) as shown in Fig. 2. Each of slots Slotᵢ consists of Data1 field, TPC field, TFCI field, Data2 field, and Pilot field. The pilot symbol set to be transmitted in the Pilot field is referred to as "the dedicated pilot block DPB" and the pattern of the pilot symbol set is referred to as "the dedicated pilot pattern DPL" hereinafter. The dedicated pilot block DPB in the slot Sloti is referred to as "the dedicated pilot block DPBᵢ", and the dedicated pilot pattern DPL in the slot Slotᵢ is referred to as "the dedicated pilot pattern DPLᵢ" in the following description, when the pilot block or the pilot pattern is respectively designated.

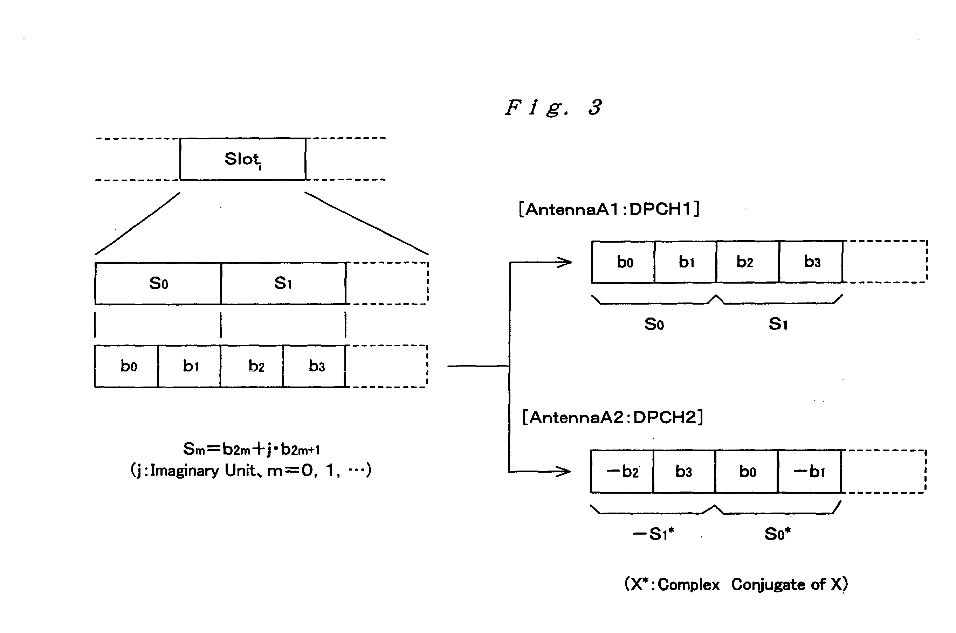

When the radio frame is transmitted from the base station BS by using the STTD method in the transmit diversity via the dedicated downlink physical channel, the radio frame signal performs general modulations corresponding to the transmitting antennas A1 and A2 respectively in the STTD method as shown in Fig. 3 to generate modulated signals. Then the modulated signals are spread by a common spreading code to transmit them from the transmitting antennas A1 and A2 simultaneously.

As shown in Fig. 3, each of complex type symbols Sₘ ( =b₂ₘ+j•b₂ₘ₊₁; bₓ is a bit, j is the imaginary unit, m=0, 1, ... ) in symbol sequences S₀, S₁, ..., which are included in slot Slotᵢ, is not modulated for the antenna A1. On the other hand, an original pair of symbols (Sₙ, Sₙ₊₁: n=0, 1, ...) is modulated to a pair of symbols (-Sₙ₊₁*, Sₙ*) for the antenna A2. As a result, the pattern of symbol sequences transmitted from the antenna A1 is orthogonal to the pattern of symbol sequences transmitted from the antenna A2.

The STTD method in the transmit diversity is not just likely applied to the dedicated pilot blocks in the downlink dedicated physical channel. However the symbol sequence of the dedicated pilot block transmitted from the antenna A1 is orthogonal to the symbol sequence of the dedicated pilot block transmitted from the antenna A2.

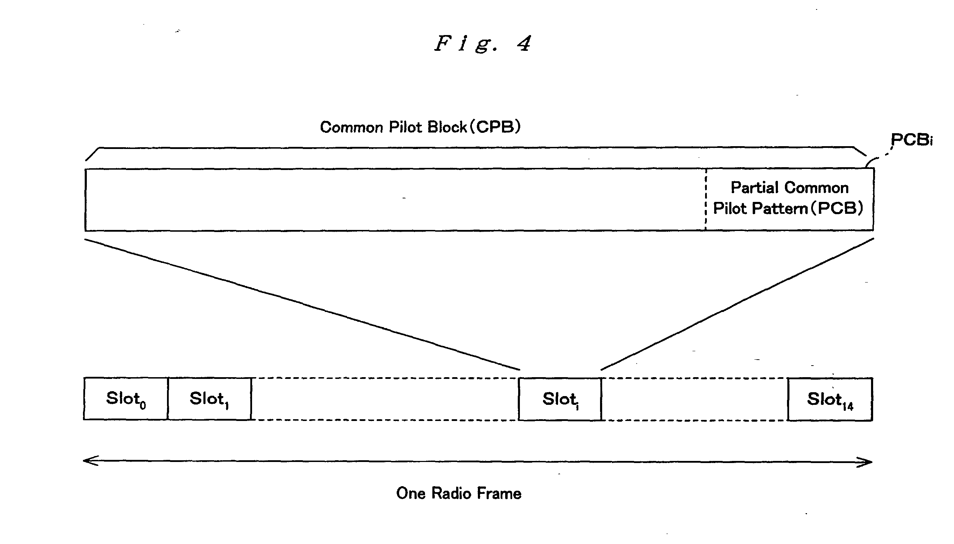

Each of the radio frames transmitted via the common pilot channel from the base station BS to the cellular phone 100 consists of fifteen slots Slotᵢ (i= 0∼14) as shown in Fig. 4. The pilot symbol set transmitted into the slots Slotᵢ ( i= 0∼14) is referred to as "the common pilot block CPB" hereinafter. The common pilot block CPB in the slot Slotᵢ is referred to as "the common pilot block DPBᵢ".

In this embodiment, the path search is performed by using the dedicated pilot block DPB or a part of the common pilot block (referred to as "a partial common pilot block PCB", hereinafter) as mentioned later. The partial common pilot block PCB locates at the same position as that of the dedicated pilot block DPB in the slot, and has the same number of symbols as that of the dedicated pilot block DPB. The partial common pilot block PCB in the slots Slotᵢ is referred to as "the partial common pilot block CPBᵢ" hereinafter. Further the pattern of the partial common pilot block CPB is referred to as "the partial common pilot pattern PCP" and the partial common pilot pattern PCP in the Slotᵢ is referred to as "the partial common pilot pattern PCPᵢ".

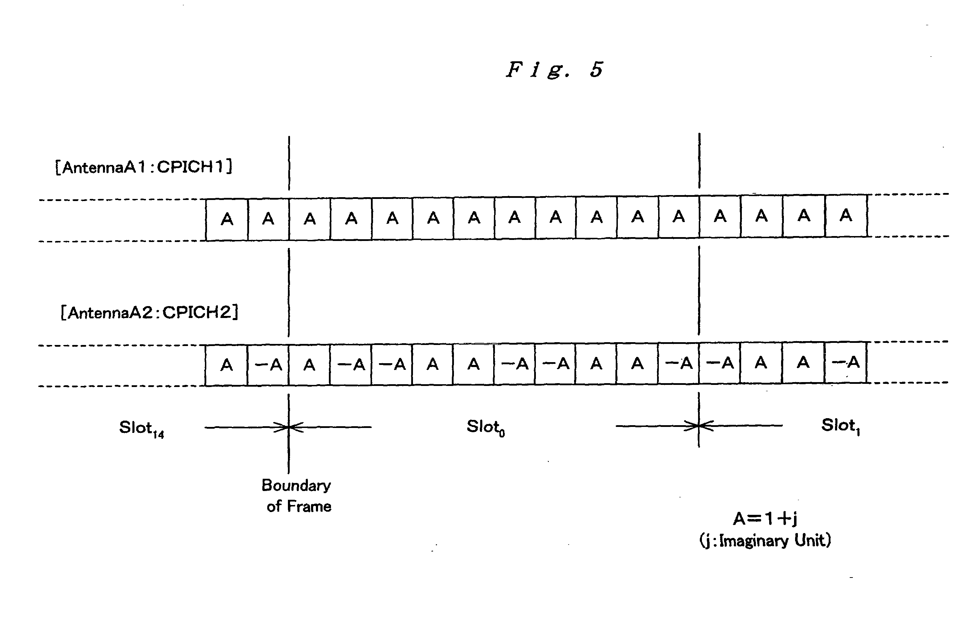

When the radio frame is transmitted from the base station BS via the common pilot channel using the transmit diversity, two patterns shown in Fig. 5, one of which is orthogonal to the other, are spread by using a common spreading code, and the spread signals are transmitted simultaneously. Note that the transmitting pilot pattern in the common pilot channel patterns for the antenna A1 and the transmitting pilot pattern in the common pilot channel for the antenna A2, as shown in Fig. 5, are transmitted from the base station BS under the standard of W-CDMA whether the STTD method is employed or not.

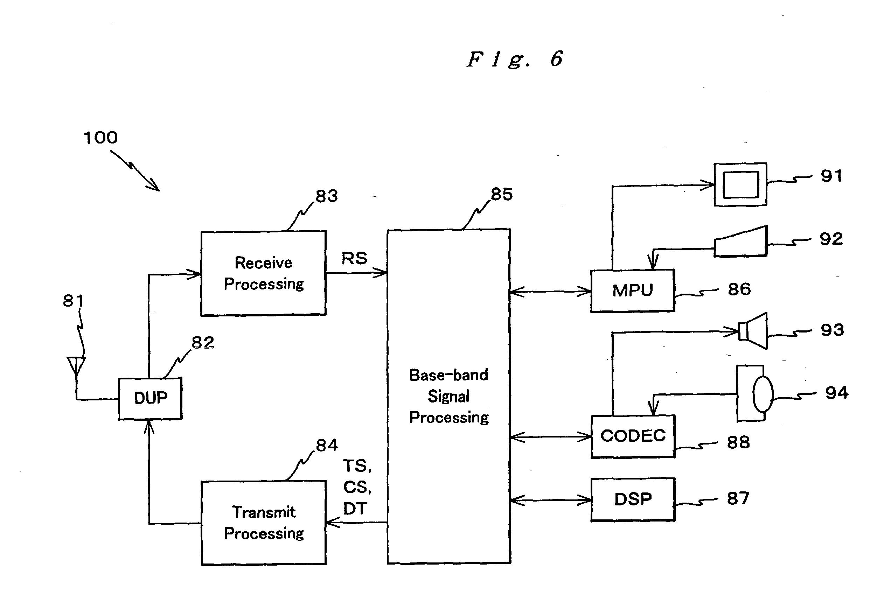

As shown in Fig.6, the cellular phone 100 comprises an antenna 81, a duplexer (DUP) 82 connected to the antenna 81, a radio frequency signal receive-processing portion 83 connected to the duplexer 82, a radio frequency signal transmit-processing portion 84 connected to the duplexer 82, and a base-band signal processing portion 85 connected to the radio frequency signal receive-processing portion 83 and the frequency signal transmit-processing portion 84.

The duplexer 82 separates the current of the transmitting signal from the radio frequency transmit-processing portion 84 to the antenna 81 and the current of the received signal from the antenna 81 to the radio frequency receive-processing portion 83. The duplexer 82 prevents the interference with the transmitting signal and the received signal.

The receive-processing portion 83 comprises a synthesizer for the received signal, a mixer for changing the frequency of the received signal, a quadrature phase de-modulating portion for de-modulating signals using Quadrature Phase Shift Keying (QPSK) method, and amplifiers and filters located suitably (these are not shown in Figs.). A more detailed description of a configuration of the receive-processing portion 83 is abbreviated in this specification, because the configuration is well known to the person skilled in the art. The receive-processing portion 83 changes the received signal having a radio frequency to a base-band received signal RS having a base-band signal to send the base-band received signal RS to the base-band signal processing portion 85. Note that the base-band received signal is a complex type signal having an in-phase component (I-component) and a quadrature component (Q-component).

The transmit-processing portion 84 comprises a quadrature modulating portion (QPM) for performing QPSK modulation, a mixer for changing the frequency of the transmit signal from the base-band frequency to the radio frequency, a synthesizer for the transmit frequency signal, and amplifiers and filters located suitably (these are not shown in Figs.). A more detailed description of a configuration of the transmit-processing portion 84 is abbreviated in this specification because the configuration is well known to the person skilled in the art. The transmit-processing portion 84 changes the transmit base-band signal TS, which has the base-band frequency and is sent from the base-band signal processing portion 85, to a transmit signal having the radio frequency, while referring the control signals CS and DT sent from the base-band signal processing portion 85. Note that the base-band transmit signal TS is also a complex type signal having an in-phase component (I-component) and a quadrature component (Q-component) similarly to the base-band receiving signal RS as mentioned above.

The cellular phone 100 further comprises a microprocessor unit (MPU) 86, a digital signal processing unit (DSP) 87, and a coder/decoder (CODEC) 88, which are connected to the base-band signal processing portion 85.

The MPU 86 controls the entire cellular phone 100. An input device 92 such as a keyboard and the like, and a display unit 91 such as a liquid crystal display unit and the like are connected to the MPU 86. When the user operates the input device 92 to input data, which is sent from the input device 92 to the MPU 86, the MPU 86 receives the input data, and displays the contents of the input data on the display unit 91 or sends the input data to the base-band signal processing portion 85 depending on the kind of the input data. For example, when the MPU 86 receives telephone number data of a user communicating with the input device 92, the MPU 86 displays the telephone number on the display unit 91 for confirmation by the user. Then the MPU 86 sends the telephone number data to the base-band signal processing unit 85 at suitable timing after the MPU unit 86 receives a call request from the input device 92.

The DSP 87 processes the digital signals sent from the base-band signal processing portion 85 under the control by the MPU 86.

The CODEC 88 performs coding acoustic signals to digitalized acoustic signals and decoding to acoustic signals from the digitalized acoustic signals between a speaker 93 and a microphone 94, which are connected to the CODEC 88. That is, digitalized acoustic data from the base-band signal processing portion 85 is converted to analogue acoustic signals by CODEC 88, and sound/voice is regenerated from the analogue acoustic signals by using the speaker 93. Analogue acoustic signals input via the microphone 94 are converted to digitalized acoustic data through the CODEC 88, and then the digitalized acoustic data is sent to the base-band signal processing portion 85 as a transmit acoustic data.

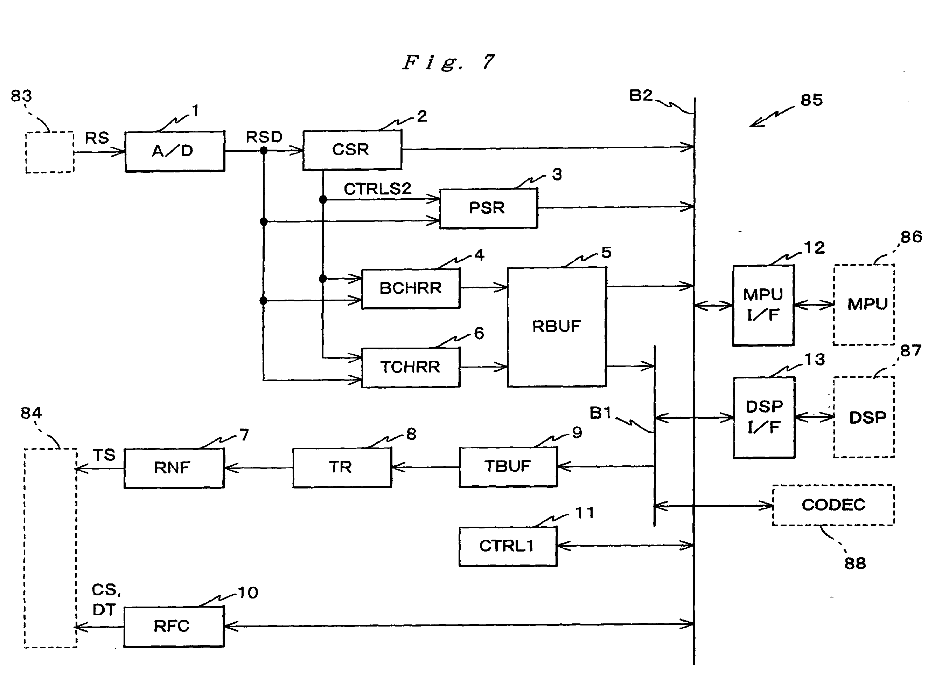

As illustrated in Fig. 7, the base-band signal processing portion 85 comprises an analogue to digital (A/D) conversion portion 1, a cell search portion (CSR) 2, a path search portion (PSR) 3, a control channel receiving portion (BCHRR) 4, a traffic channel receiving portion (TCHRR) 6, and a receiving buffer (RBUF) 5 for processing the base-band received signal RS sent from the receive-processing portion 83. The base-band signal processing portion 85 also comprises a transmitting buffer (TBUF) 9, a transmitting portion (TR) 8, and a transmitting roll off filter (RNF) 7 for generating the base-band transmitting signal TS to be sent to the transmit-processing portion 84. The base-band signal processing portion 85 further comprises a transmit control portion (RFC) 10 for controlling the transmit-processing portion 84 and a controlling portion (CTRL1) 11 for controlling the entire base-band signal processing portion 85.

The A/D conversion portion 1 has an A/D converter for I-component (which is referred to as "signal RSI", hereinafter) of the base-band received signal RS, and an A/D converter for Q-component (which is referred to as "signal RSQ", hereinafter) of the base-band received signal RS. A digital signal RSD, which is obtained as the result of A/D conversion from the base-band received signal RS through the A/D conversion portion 1, is sent to the cell search portion 2, the path search portion 3, the control channel receiving portion 4, and the traffic channel receiving portion 6.

Note that the result of the A/D conversion by A/D conversion portion 1 from the signal RSI is referred to as "I-component received signal RDI" and the result of the A/D conversion by A/D conversion portion 1 from the signal RSQ is referred to as "Q-component received signal RDQ" in the following description. Furthermore, the I-component received signal RDI and the Q-component received signal RDQ are generally referred to as "received signal RSD".

The cell search portion 2 performs the so-called initial synchronization timing extraction in the downlink from the base station, to which the cellular phone 100 must establish a radio-link, based on the correlation between the received signal RSD and the predetermined spreading code. The initial synchronization timing extraction includes slot synchronization timing extraction and frame synchronization timing extraction, and the received signal RSD includes the signal components which is received via the primary-synchronization channel (P-SCH), the secondary-synchronization channel (S-SCH), and the common pilot channel (CPICH). After the extraction of the slot synchronization timing and the frame synchronization timing, the cell search portion 2 identifies a scrambling code used by the base station to which the radio-link is established. The cell search portion 2 comprises a matched filter or a plurality of correlation calculators for calculating the above-mentioned correlation. Note that the cell search portion 2 also performs not only initial cell search for extracting the initial synchronization but also peripheral cell search for soft hand-over.

The slot synchronization timing and the frame synchronization timing extracted by the cell search portion 2 are sent to the path search portion 3, the control channel receiving portion 4, and the traffic channel receiving portion 6. The scrambling code identified by the cell search portion 2 is sent to the MPU 86 via MPU bus B2 and MPU interface 12. Note that the slot synchronization timing and the frame synchronization timing extracted by the cell search portion 2 are shown as "CTRLS2" in Fig. 7.

When the so-called multi-path phenomena occur in signal transfer from the base station BS to the cellular phone 100 after the initial cell search by the cell search portion 2, the path search portion 3 identifies a phase difference between paths based on the received signal RSD and the synchronous timings CTRLS2 (the slot synchronization timing and the like). The configuration of the path search portion is described below.

In order to perform various controls for the cellular phone 100, the control channel receiving portion 4 extracts control data, which is transmitted from the base station BS, from the received signal RSD to decode. The control channel receiving portion 4 performs de-spreading by using the scrambling code (spreading code), synchronous detection, and RAKE-combining for extracting the control data. Thus, the control channel receiving portion 4 comprises a sliding correlator, a synchronous detector, and a RAKE-combining unit (these are not shown in Figs.). The control channel receiving portion 4 sends the control data that is extracted to be decoded (referred to as "decoded control data", hereinafter) to the receiving buffer 5. The decoded control data temporarily stored in the receiving buffer 5 is sent to the MPU 86 via the MPU bus B2 and the MPU interface 12.

The traffic channel receiving portion 6 extracts the data in the traffic channel transmitted from the base station BS to decode. In order to extract the traffic channel signal, the traffic channel receiving portion 6 performs de-spreading by using the scrambling code (spreading code), synchronous detection, and RAKE-combining. Therefore, the control traffic channel receiving portion 6 comprises a sliding correlator, a synchronous detector, and a RAKE-combining unit (these are not shown in Figs.). The traffic channel receiving portion 6 sends the data that is extract to be decoded (referred to as "decoded data", hereinafter) to the receiving buffer 5. The decoded data temporarily stored in the receiving buffer 5 is sent to the MPU 86 via the MPU bus B2 and the MPU interface 12, or is sent to the DSP 87 via DSP bus B1 and DSP interface 13.

The transmitting portion 8 generates the transmitting signal, which is obtained by multiplying data in the transmitting buffer 9 and the spreading code. The data is sent from the MPU 86 or the CODEC 88 to the transmitting buffer 9 via the MPU bus B2, or is sent from the DSP 87 to the transmitting buffer 9 via the DSP bus B1 to be stored temporarily. Therefore, the transmitting portion 8 comprises a multiplier for multiplying the transmitting data and the predetermined spreading code. The transmitting signal generated by the transmitting portion 8 is shaped through the transmitting roll off filter 7, and then the shaped transmitting signal is sent to the transmit-processing portion 84.

The control portion RFC sends the control signal CS and DT, both of which control the transmit-processing portion 84, to the transmit-processing portion 84 according to instructions from the MPU 86 via the MPU interface 12 and the MPU bus 82.

The control portion CTRL1 performs other controls in the cellular phone 100 except these described above according to instructions from the MPU 86 via the MPU interface 12 and the MPU bus 82.

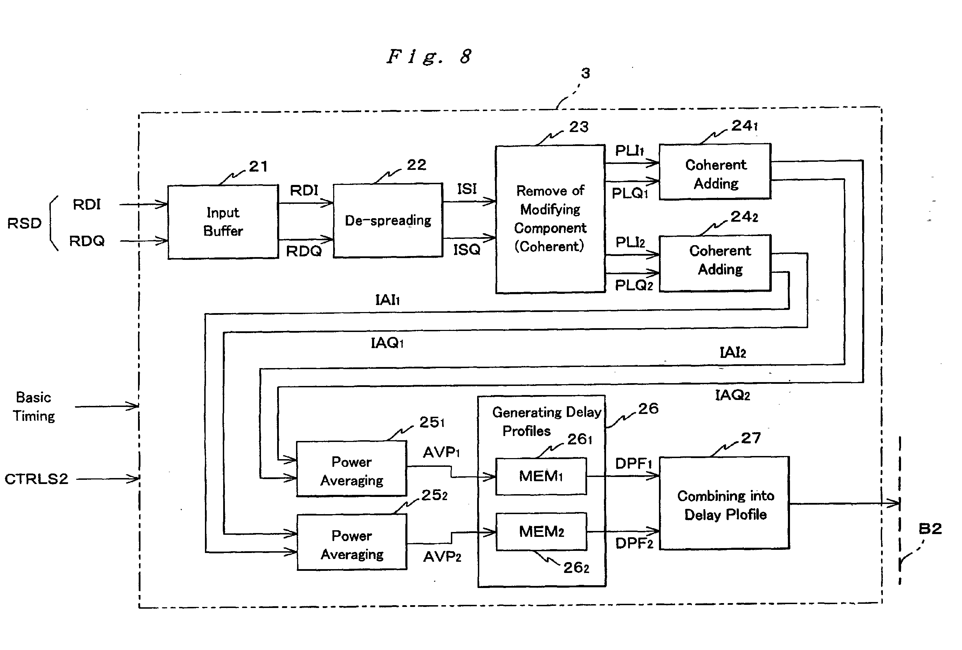

As illustrated in Fig.8, the path search portion 3 comprises: (a) an input buffer 21 for temporarily storing the received signal RSD (RDI, RDQ) sent from the A/D conversion portion 1; (b) a de-spreading portion 22 for respectively de-spreading I-component received signal RDI and Q-component received signal RDQ sent from the input buffer 21; and (c) a coherent portion 23 for removing the modifying component for the pilot patterns from the pilot blocks in I-component de-spread signal ISI and Q-component de-spread signal ISQ which are sent out from the de-spreading portion 22, wherein the pilot patterns which are respectively corresponding to the antennas A1 and A2 in the base station BS. The coherent portion 23 sends out I-component signal PLI₁ and Q-component signal PLQ₁ corresponding to the antenna A1, and I-component signal PLI₂ and Q-component signal PLQ₂ corresponding to the antenna A2.

The path search portion 3 further comprises: (d) a coherent adder 24₁ for separately performing coherent-adding each of the I-component signal PLI₁ and Q-component signal PLQ₁ in symbol period, and a coherent adder 24₂ for separately performing coherent-adding each of the I-component signal PLI₂ and the Q-component signal PLQ₂ in symbol period; (e) a power average calculator 25₁ for calculating the average of the signal power of the result obtained from the coherent-adding in the coherent adder 24₁, and a power average calculator 25₂ for calculating the average of the signal power of the result obtained by the coherent-adding in the coherent adder 24₂; (f) a delay profile generating portion 26 having a memory 26₁ for storing the result obtained by calculation in the power average calculator 25₁, and a memory 26₂ for storing the result obtained by using calculation in the power average calculator 25₂, and (g) a delay profile combining portion 27 for synthesizing the delay profile for the multi-path selection based on the delay profiles, which are generated by the delay profile generating portion 26, corresponding to the antennas A1 and A2.

Note that the MPU 86 selects the multi-path to be used in the RAKE-combining based on the delay profile for the multi-path selection in this embodiment.

A basic timing produced by a basic clock generating portion (not shown in Figs) and the synchronization timing CTRLS2 produced by the cell search portion 2 are sent to the path search portion 3. The path search portion 3 identifies a frame boundary, a slot boundary, and a position of the pilot block by using the timings, and it performs the path search.

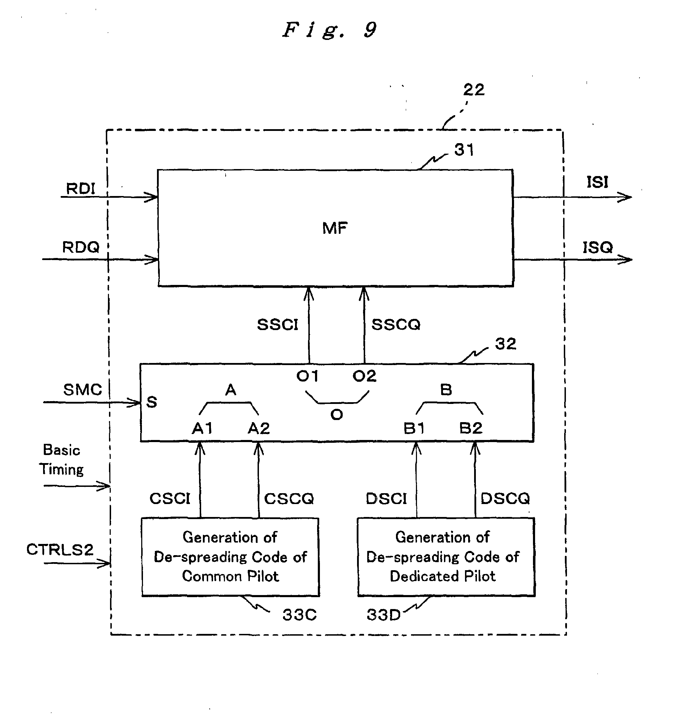

As shown in Fig.9, the de-spreading portion 22 comprises a matched filter (MF) 31, a code generator 33C for generating a de-spreading code for the common pilot, and a code generator 33D for generating a de-spreading code for the dedicated pilot. A signal pair (CSCI, CSCQ) consists of an I-component CSCI and a Q-component CSCQ of the de-spreading code for the common pilot generated by the code generator 33C, and a signal pair (DSCI, DSCQ) consists of an I-component DSCI and a Q-component DSCQ of the de-spreading code for the dedicated pilot generated by the code generator 33D. The signal pair (CSCI, CSCQ) and the signal pair (DSCI, DSCQ) are sent to a multiplexer 32. Either of the signal pair (CSCI, CSCQ) or the signal pair (DSCI, DSCQ) is sent from the multiplexer 32 to the matched filter 31 as the selected de-spreading code pair (SSCI, SSCQ), depending on the select instruction signal SMC issued by the MPU 86 via the MPU interface 12 and the MPU bus B2.

In the de-spreading portion 22 configured as mentioned above, the received signal pair (RDI, RDQ) is despread by using the selected de-spreading code pair (SSCI, SSCQ), which is selected by the multiplexer 32 depending on the instruction from the MPU 86. Then the de-spreading portion 22 outputs the result of the de-spreading as a de-spreading signal pair (ISI, ISQ).

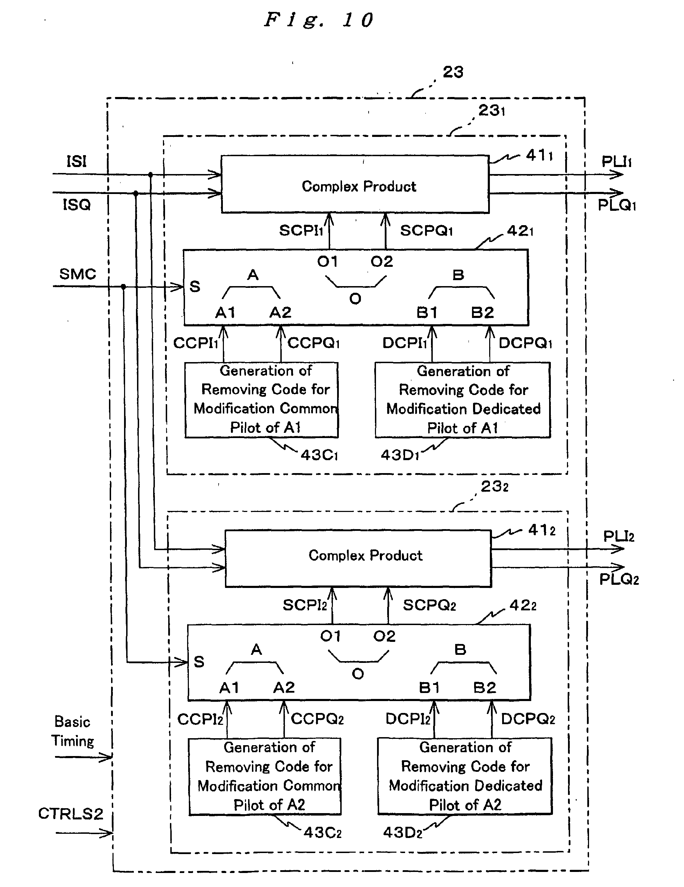

As shown in Fig. 10, the coherent portion 23 comprises the first signal extracting portion 23₁ for extracting a pilot block transmitted from the antenna A1 in the base station BS and the second signal extracting portion 23₂ for extracting a pilot block transmitted from the antenna A2 in the base station in STTD method.

The first signal extracting portion 23₁ comprises a complex product calculating portion 41₁, a code generator 43C₁ for generating a signal pair (CCPI₁, CCPQ₁) which consists of an I-component and a Q-component of complex conjugate code of a modulating code corresponding to the respective antenna for the common pilot transmitted from the antenna A1, and a code generator 43D₁ for generating a signal pair (DCPI₁, DCPQ₁) which consists of an I-component and a Q-component of complex conjugate code of a modulating code corresponding to the respective antenna for the dedicated pilot transmitted from the antenna A2. The signal pair (CCPI₁, CCPQ₁) generated by the code generator 43C₁ and the signal pair (DCPI₁, DCPQ₁) generated by the code generator 43D₁ are sent to a multiplexer 42₁. Either of the signal pair (CCPI₁, CCPQ₁) or the signal pair (DCPI₁, DCPQ₁) is sent from the multiplexer 42₁ to the complex product calculating portion 41₁ as the first signal pair for selection (SPCI₁, SCPQ₁) depending on the select instruction signal SMC issued by the MPU 86.

The first signal extracting portion 23₁, configured as mentioned above, calculates a product of the de-spread signal pair (ISI, ISQ) and the first signal pair for selection (SPCI₁, SCPQ₁) selected by multiplexer 42₁ according to the instruction from MPU 86 so that the first signal extracting portion 23₁ extracts the pilot block transmitted from the antenna A1. The first extracting portion 23₁ outputs a signal pair (PLI₁, PLQ₁) obtained by this extracting.

The second extracting portion 23₂ is configured as same as the first signal extracting portion 23₁. The second extracting portion 23₂ comprises a complex product calculating portion 41₂; a code generator 43C₂ for generating a signal pair (CCPI₂, CCPQ₂) which consists of an I-component CCPI₂ and a Q-component CCPQ₂ of complex conjugate code of a modulating code corresponding to the respective antenna for the common pilot transmitted from the antenna A2; and a code generator 43D₂ for generating a signal pair (DCPI₂, DCPQ₂) which consists of an I-component DCPI₂ and a Q-component DCPQ₂ of complex conjugate code of a modulating code corresponding to the respective antenna for the dedicated pilot transmitted from the antenna A2. The signal pair (CCPI₂, CCPQ₂) generated by the code generator 43C₂ and the signal pair (DCPI₂, DCPQ₂) generated by the code generator 43D₂ are sent to a multiplexer 42₂, and either of the signal pair (CCPI₂, CCPQ₂) or the signal pair (DCPI₂, DCPQ₂) is sent from the multiplexer 42₂ to the complex product calculating portion 41₂ as the second signal pair for selection (SPCI₂, SCPQ₂) depending on the select instruction signal SMC issued by MPU 86.

The second extracting portion 23₂, configured as mentioned above, calculates a product of the de-spread signal pair (ISI, ISQ) and the second signal pair for selection (SPCI₂, SCPQ₂) so that the second signal extracting portion 23₂ extracts the pilot block transmitted from the antenna A2. The second extracting portion 23₂ outputs a signal pair (PLI₂, PLQ₂) obtained by this extracting.

Under the control of MPU 86, the path search operation in the path search portion 3 configured as the mentioned above will be described as follows.

In the following description, it is assumed that the cell search portion 2 has finished the initial cell search that is performed after the power of cellular phone 110 was switched on. It is also assumed that the path search portion 3 is provided the slot synchronization timing and the frame synchronization timing relating to the downlink from the base station sent from the cell search portion 2, and to the base station the cellular phone 100 must establish the radio-link.

Firstly, a path search, which uses the partial common pilot block PCB, will be described. In case of the path search using the partial common pilot block PCB, the MPU 86 sends instruction to use the partial common pilot block PCB to both the de-spreading portion 22 and the coherent portion 23 by using the select instruction signal SMC via the MPU interface 12 and the MPU bus B2. In the de-spreading portion 22 which received the instruction, the multiplexer 32 sends the de-spreading code signal pair (i.e., a spreading code signal pair used for spreading in the base station BS) for the partial common pilot (CSCI, CSCQ) to the matched filter 31. In the coherent portion 23 which received the instruction, the multiplexer 42₁ sends the signal pair for the partial common pilot (CCPI₁, CCPQ₁) to the complex product calculating portion 41₁ in the first signal extracting portion 23₁, and the multiplexer 42₂ sends the signal pair for the partial common pilot (CCPI₂, CCPQ₂) to the complex product calculating portion 41₂ in the second signal extracting portion 23₂.

In this state, when the path search portion 3 receives the received signal pair (RDI, RDQ), it is temporarily stored in the input buffer 21 to be output to the de-spreading portion 22. When the de-spreading portion 22 receives the received signal pair (RDI, RDQ), the matched filter 31 calculates correlation between the received signal pair (RDI, RDQ) and the de-spreading code signal pair (CSCI, CSCQ) by using the basic timing and the control signal CTRLS2 (the slot synchronization timing and the frame synchronization timing) sent from the cell search portion 2. The de-spreading portion 22 sends the result of the calculation to obtain the correlation as the de-spread signal pair (ISI, ISQ) to the coherent portion 23.

In the coherent portion 23 which received the de-spread signal pair (ISI, ISQ), the complex product calculating portion 23₁ calculates a complex product-sum of the de-spread signal pair (ISI, ISQ) and the signal pair (CCPI₁, CCPQ₁). The first signal extracting portion 23₁ sends the result of calculation to obtain the complex product-sum for the antenna A1, the signal pair (PLI₁, PLQ₁), to the coherent-adding portion 24₁.

On the other hand, in the coherent portion 23, the complex product calculating portion 23₂ calculates a complex product-sum of the de-spread signal pair (ISI, ISQ) and the signal pair (CCPI₂, CCPQ₂). The second signal extracting portion 23₂ sends the result of the calculation to obtain the complex product-sum for the antenna A2, the signal pair (PLI₂, PLQ₂), to the coherent-adding portion 24₂.

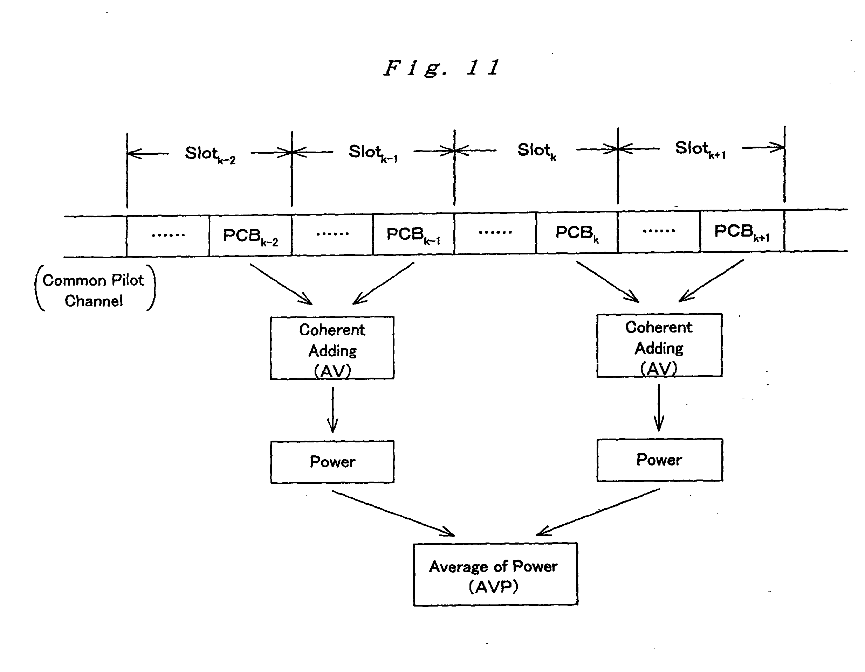

The coherent-adding portion 24₁, which received the signal pair (PLI₁, PLQ₁), performs the coherent-adding of amplitudes of the in-phase (I) component PLI₁ at sampling points existing in a plurality of slots and performs the coherent-adding of amplitudes of the quadrature (Q) component PLQ₁ at the sampling points, wherein the sampling points are arranged at a symbol period in the pilot block. For example, as shown in Fig. 11, the coherent-adding portion 24₁ performs the coherent-adding of the amplitudes of I component PLI₁ respectively at sampling points existing in the subsequent 2 slots (Slotₖ₋₂, Slotₖ₋₁) and the sequential 2 slots (Slotₖ, Slotₖ₊₁), which are included in subsequent 4 slots (Slotₖ₋₂, Slotₖ₋₁, Slotₖ, Slotₖ₊₁), wherein the sampling points are arranged at the symbol period in the pilot blocks. The coherent-adding portion 24₁ also performs the coherent-adding of amplitudes of Q component PLQ₁ as same as I component PLI₁ described above. Namely, the coherent-adding portion 24₁ performs the coherent-adding of the I component PLI₁ and Q component PLQ₁ for two partial common pilot block (PCBₖ₋₂, PCBₖ₋₁) respectively, and performs the coherent-adding of the I component PLI₁ and Q component PLQ₁ for two partial common pilot block (PCBₖ, PCBₖ₊₁), respectively.

On the other hand, the coherent-adding portion 24₂, which received the signal pair (PLI₂, PLQ₂), performs the coherent-adding of amplitudes of the I component PLI₂ and the Q component PLQ₂ at the sampling points existing in the plurality of slots as same as that done by the coherent-adding portion 24₁, wherein the sampling points are arranged at sample period in the pilot blocks.

The result of the coherent-adding in the coherent-adding portion 24₁ is sent to the power average calculator 25₁, and the result of the coherent-adding in the coherent-adding portion 24₂ is sent to the power average calculator 25₂.

The power average calculator 25₁ calculates signal power (correlation power) based on the I-component IAI₁ and Q-component IAQ₁ of the result of the coherent-adding. Then the power average calculator 25₁ performs cyclic integration calculation of the signal power, that is the correlation power, by using the symbol period to calculate the average power of sampled signal. For example, as shown in Fig. 11, the power average calculator 25₁ calculates the average power (AVP) in 4 slots. The power average calculator 25₁ sends the calculated power average AVP₁ to the memory 26₁ in the delay profile generating portion 26.

On the other hand, the power average calculator 25₂ calculates signal power (correlation power) based on the I-component IAI₂ and Q-component IAQ₂ of the result of the coherent-adding to calculate the average power of sampled signal. The power average calculator 25₂ sends the calculated power average AVP₂ to the memory 26₂ in the delay profile generating portion 26.

The delay profile generating portion 26 stores the power average AVP₁ of the sample signal into the memory 26₁ sequentially and generates a delay profile DPF₁ corresponding to the received signal from the antenna A₁. The delay profile generating portion 26 stores the power average AVP₂ of the sample signal into the memory 26₂ sequentially and generates a delay profile DPF₂ corresponding to the received signal from the antenna A2.

The delay profile combining portion 27 synthesizes a delay profile for selecting the multi-path, which is common to the antennas A1 and A2, based on the delay profiles DPF₁ and DPF₂ generated as mentioned above corresponding to the antennas A1 and A2. The delay profile combining portion 27 reports the delay profile for selecting the multi-path to the MPU 86 via the MPU bus B2 and the MPU interface 12.

The MPU 86 extracts sampling positions in which the values of the power averages are not smaller than a predetermined threshold value, and calculates path-phase information that is common to the antennas A1 and A2. Then the MPU 86 performs the multi-path selection. As the result of the processing mentioned above, the MPU 86 obtains the multi-path (timing of the multi-path) to be employed in the RAKE-combining.

Subsequently, the MPU 86 sends the multi-path obtained as mentioned above to the control channel receiving portion 4 and the traffic channel receiving portion 6 as the multi-path to be employed in the RAKE-combining. The control channel receiving portion 4 and the traffic channel receiving portion 6 performs the RAKE-combining for the received signal, depending on the timing corresponding to the multi-path received from the MPU 86.

A path search, which uses the dedicated pilot block DPB, will be described. In case of the path search using the dedicated pilot block DPB, the MPU 86 sends instruction to use the dedicated pilot block DPB to both the de-spreading portion 22 and the coherent portion 23, by using the select instruction signal SMC via the MPU interface 12 and the MPU bus B2. As a result, in the de-spreading portion 22 which received the instruction, the multiplexer 32 sends the de-spreading code signal pair (DSCI, DSCQ) for the dedicated pilot to the matched filter 31. In the coherent portion 23 which received the instruction, the multiplexer 42₁ sends the signal pair (DCPI₁, DCPQ₁) for the dedicated common pilot to the complex product calculating portion 41₁ in the first signal extracting portion 23₁. The multiplexer 42₂ sends the signal pair (DCPI₂, DCPQ₂) for the dedicated pilot to the complex product calculating portion 41₂ in the second signal extracting portion 23₂.

In this situation, when the path search portion 3 receives the received signal pair (RDI, RDQ), the signal pair is temporarily stored in the input buffer 21 to be output to the de-spreading portion 22. In the de-spreading portion 22 which received the received signal pair (RDI, RDQ), the matched filter 31 calculates correlation between the received signal pair (RDI, RDQ) and the de-spreading code signal pair (DSCI, DSCQ) by using the basic timing and/or the control signal CTRLS2 (the slot synchronization timing and the frame synchronization timing) sent from the cell search portion 2. The de-spreading portion 22 sends the result of the calculation to obtain the correlation, the de-spread signal pair (ISI, ISQ), to the coherent portion 23.

In the coherent portion 23 which received the de-spread signal pair (ISI, ISQ), the first signal extracting portion 23₁ calculates a complex product-sum of the de-spread signal pair (ISI, ISQ) and the signal pair (DCPI₁, DCPQ₁). The first signal extracting portion 23₁ sends the result of the calculation to obtain the complex product-sum for the antenna A1, the signal pair (PLI₁, PLQ₁), to the coherent-adding portion 24₁.

On the other hand, in the coherent portion 23, the second signal extracting portion 23₂ calculates a complex product-sum of the de-spread signal pair (ISI, ISQ) and the signal pair (DCPI₂, DCPQ₂). The second extracting portion 23₂ sends the result of the calculation to obtain the complex product-sum for the antenna A2, which is the signal pair (PLI₂, PLQ₂), to the coherent-adding portion 24₂.

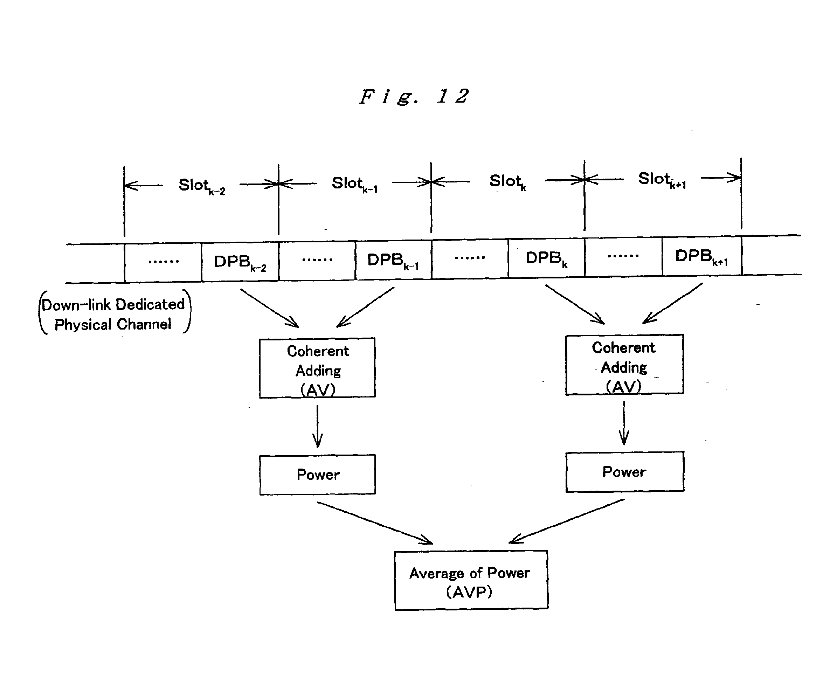

The coherent-adding portion 24₁, which received the signal pair (PLI₁, PLQ₁), performs the coherent-adding of amplitudes of the in-phase (I) component PLI₁ at sampling points existing in a plurality of slots, wherein the sampling points are arranged at the symbol period in the pilot blocks, and performs the coherent-adding of amplitudes of the quadrature (Q) component PLQ₁ at the sampling point existing in the plurality of slots. For example, as shown in Fig. 12, the coherent-adding portion 24₁ performs the coherent-adding of amplitudes of I component PLI₁ respectively at sampling points existing in the subsequent 2 slots (Slotₖ₋₂, Slotₖ₋₁) and the subsequent 2 slots (Slotₖ, Slotₖ₊₁), which are included in subsequent 4 slots (Slotₖ₋₂, Slotₖ₋₁, Slotₖ, Slotₖ₊₁), wherein the sampling points are arranged at the symbol period in the pilot blocks. The coherent-adding portion 24₁ also performs the coherent-adding of Q component PLQ₁ as same as PLI₁ described above. Namely, the coherent-adding portion 24₁ performs the coherent-adding of the I component PLI₁ and Q component PLQ₁ for two partial common pilot block (DPLₖ₋₂, DPLₖ₋₁) respectively, and performs the coherent-adding of the I component PLI₁ and Q component PLQ₁ for two partial common pilot block (DPLₖ, DPLₖ₊₁) respectively.

On the other hand, the coherent-adding portion 24₂, which received the signal pair (PLI₂, PLQ₂), performs the coherent-adding of the I component PLI₂ and the Q component PLQ₂ at the sampling points in the plurality of slots as same as that done by the coherent-adding portion 24₁, wherein the sampling points are arranged at the symbol period in the pilot blocks.

The result of the coherent-adding in the coherent-adding portion 24₁ is sent to the power average calculator 25₁, and the result of the coherent-adding in the coherent-adding portion 24₂ is sent to the power average calculator 25₂.

The power average calculator 25₁ calculates signal power (correlation power) based on the I-component IAI₁ and Q-component IAQ₁ of the result of the coherent-adding. Then the power average calculator 25₁ performs cyclic integration calculation of the correlation power with the symbol period to calculate the average power of sampled signal. For example, as shown in Fig. 12, the power average calculator 25₁ calculates the average power (AVP) in 4 slots. The power average calculator 25₁ sends the calculated power average AVP₁ to the memory 26₁ in the delay profile generating portion 26.

On the other hand, the power average calculator 25₂ calculates correlation power based on the I-component IAI₂ and Q-component IAQ₂ of the result of the coherent-adding to calculate the average power of sampled signal. The power average calculator 25₂ sends the calculated power average AVP₂ to the memory 26₂ in the delay profile generating portion 26.

The delay profile generating portion 26 stores the power average AVP₁ of the sample signal into the memory 26₁ sequentially and generates a delay profile DPF₁ corresponding to the received signal from the antenna A₁ as same as the case of the path search using the partial common pilot block PCB. The delay profile generating portion 26 stores the power average AVP₂ of the sample signal into the memory 26₂ sequentially and generates a delay profile DPF₂ corresponding to the received signal from the antenna A₂. The delay profile combining portion 27 combines into a delay profile for selecting the multi-path, which is common to the antennas A1 and A2, based on the delay profiles DPF₁ and DPF₂ generated as mentioned above corresponding to the antennas A1 and A2, as same as the case of the path search using the partial common pilot block PCB. The delay profile combining portion 27 reports the delay profile for selecting the multi-path to the MPU 86 via the MPU bus B2 and the MPU interface 12.

Then the MPU 86 performs the multi-path selection, similarly to the path search when the partial common pilot block is focused, to obtain the multi-path (timing of the multi-path) for RAKE-combining. Subsequently, the MPU 86 sends the multi-path obtained as mentioned above to the control channel receiving portion 4 and the traffic channel receiving portion 6 as the multi-path to be employed in the RAKE-combining. The control channel receiving portion 4 and the traffic channel receiving portion 6 performs the RAKE-combining for the received signal, depending on the timing corresponding to the multi-path received from the MPU 86.

As described above, the coherent portion 23 calculate the complex product between the de-spread signal obtained by the de-spreading portion 22 and each of the complex conjugate patterns assigned to the antennas A1 and A2 respectively; and separates the pilot block in the de-spread signal into a pilot block part corresponding to the antenna A1 and a pilot block part corresponding to the antenna A2. The delay profile generating portion 26 respectively generates the delay profiles for the signals transmitted from the antennas A1 and A2, which are generated by using the separated signals, and then the delay profile combining portion 27 combines the delay profiles to obtain the delay profile for selecting the multi-path. Subsequently, the MPU 86 performs multi-path selection based on the delay profile for selecting the multi-path. According to the first embodiment of the present invention, the path search is performed accurately in the DS-CDMA system which employs the transmit diversity.

In the first embodiment, the path search portion 3 performs coherent-adding for amplitudes of in-phase component in each of the separated signals at the sampling points existing in the plurality of subsequent slots, and performs coherent-adding for amplitudes of a quadrature component in each of the separated signals at the sample points over the plurality of subsequent slots, wherein the sampling points are periodically arranged in a symbol period inside of the plurality of pilot blocks. Subsequently, the average value of signal power is calculated using the symbol period, and the delay profiles are generated, based on the calculated signal power. According to the first embodiment of the present invention, the influence received from background noise and interference component is suppressed.

Furthermore, since the cellular phone 100 comprises the path search portion 3 which performs the path search accurately, RAKE-receiving based on the result of the path search with high accuracy improves the quality of the receive processing for the cellular phone 100.

In the first embodiment, the path search portion 3 can perform the path search serially; wherein either of the partial common pilot block or the dedicated pilot block is solely used during path search, or is alternatively used by turning off the pilot block which is not used, depending on time.

In addition, when resource from the de-spread portion 22 to the delay profile generating portion is provided for every path search using the partial common pilot block or the path search using the dedicated pilot block, the path search using the partial common pilot block and the path search using the dedicated pilot block can be performed in parallel.

Moreover, although the path search is performed using the part of the common pilot block in the above embodiment, the path search can be performed by using the entire of the common pilot block. Furthermore, the path search is also performed by using the entire or the part of the dedicated pilot block in the above embodiment.

Moreover, although the de-spreading portion 22 comprises the matched filter as a resource for the calculation of correlation in the above embodiment, the de-spreading portion 22 may comprise a plurality of correlators instead of the matched filter.

Furthermore, any number can be selected for the slot number to be used in coherently adding or calculating power average, if the number is plural.

Moreover, although the MPU 86 performs the multi-path selection in the above embodiment, the DSP 87 can perform the multi-path selection.

### <Second Embodiment>

Second embodiment of the present invention will be described below with reference to attached figures. When the second embodiment is compared to the first embodiment, only the configuration of path search portion is different. Therefore, the different points will be mainly described in the following. Note that the same symbol will be assigned to the same or equivalent element and repeated description will be omitted in the following description.

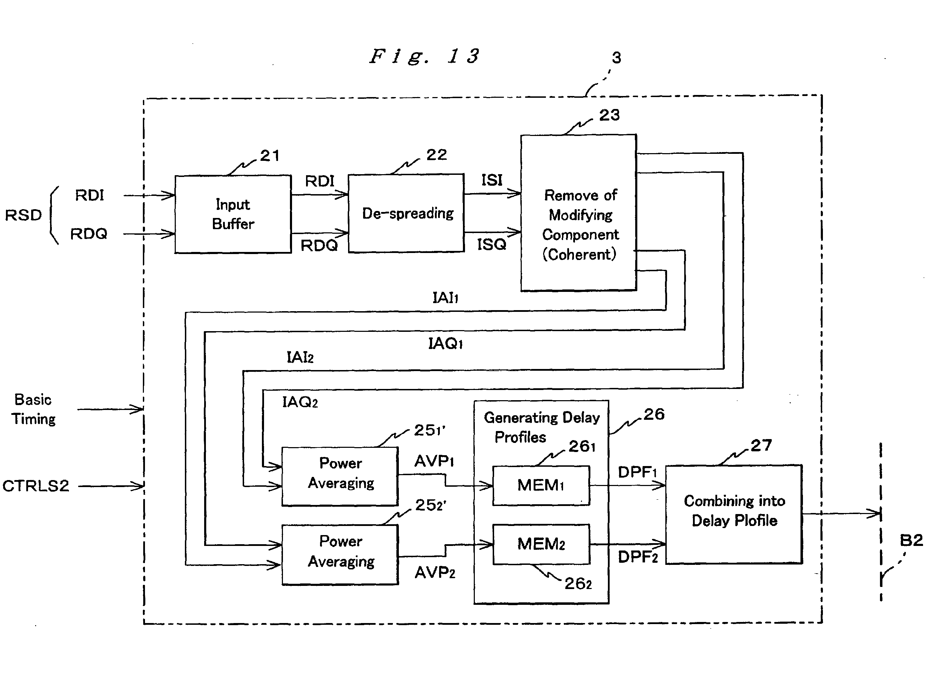

As illustrated in Fig.13, the path search portion comprises, similarly to the first embodiment, (a) an input buffer 21 for buffering the received signal RSD (RDI, RDQ) sent from the A/D conversion portion 1; (b) a de-spreading portion 22 for respectively de-spreading a I-component received signal RDI and a Q-component received signal RDQ sent from the input buffer 21 respectively; and (c) a coherent portion 23 for removing the modulating component for the pilot patterns from the pilot blocks in I-component de-spread signal ISI and Q-component de-spread signal ISQ which are sent out from the de-spreading portion 22; wherein the pilot patterns respectively corresponding to the antennas A1 and A2 in the base station BS. The coherent portion 23 sends I-component signal PLI₁ and Q-component signal PLQ₁ corresponding to the antenna A1, and I-component signal PLI₂ and Q-component signal PLQ₂ corresponding to the antenna A2.

The path search portion 3 further comprises (d) a power average calculator 25₁' for calculating the average of the power of signal having the I-component PLI₁ and the Q-component signal PLQ₁, and a power average calculator 25₂' for calculating the average of the power of the signal having the I-component PLI₂ and the Q-component signal PLQ₂; (e) a delay profile generating portion 26 having a memory 26₁ for storing the result obtained by using the calculation in the power average calculator 25₁', and a memory 26₂ for storing the result obtained by the calculation in the power average calculator 25₂', and (f) a delay profile combining portion 27 for synthesizing the delay profile for the multi-path selection based on the delay profiles which are generated by the delay profile generating portion 26.

The path search operation by the path search portion 3 under the control of the MPU 86 in the second embodiment will be described as follows.

In the following description, it is assumed that the cell search portion 2 has finished the initial cell search that is performed after the power of cellular phone 110 was on. It is also assumed that the cell search portion 2 is sending the slot synchronization timing and the frame synchronization timing relating to the downlink from the base station, to which the cellular phone 100 must establish the radio-link.

Firstly, a path search, which uses the partial common pilot block PCB, will be described. In case of the path search using the partial common pilot block PCB, as same as the first embodiment, the MPU 86 sends instruction to use the partial common pilot block PCB to the de-spreading portion 22 and the coherent portion 23 by use of the select instruction signal SMC via the MPU interface 12 and the MPU bus B2.

In this case, when the path search portion 3 receives the received signal pair (RDI, RDQ), the received signal pair (RDI, RDQ) is temporarily stored in the input buffer 21 to be output to the de-spreading portion 22. When the de-spreading portion 22 receives the received signal pair (RDI, RDQ), the matched filter 31 calculates correlation between the received signal pair (RDI, RDQ) and the de-spreading code signal pair (CSCI, CSCQ) by using the basic timing and the control signal CTRLS2 (the slot synchronization timing and the frame synchronization timing) sent from the cell search portion. The de-spreading portion 22 sends the result of the calculation to obtain the correlation, the de-spread signal pair (ISI, ISQ), to the coherent portion 23.

In the coherent portion 23 which received the de-spread signal pair (ISI, ISQ), the complex product calculating portion 23₁ calculates a complex product-sum of the de-spread signal pair (ISI, ISQ) and the signal pair (CCPI₁, CCPQ₁) similarly to the case of the first embodiment. In the coherent portion 23, the complex product calculating portion 23₂ calculates a complex product-sum of the de-spread signal pair (ISI, ISQ) and the signal pair (CCPI₂, CCPQ₂). Then the first signal extracting portion 23₁ sends the result of the calculation to obtain the complex product-sum for the antenna A1, the signal pair (PLI₁, PLQ₁), to the power averaging portion 25₁' and the second signal extracting portion 23₂ sends the result of the calculation to obtain the complex product-sum for the antenna A2, which is the signal pair (PLI₂, PLQ₂), to the power averaging portion 25₂'.

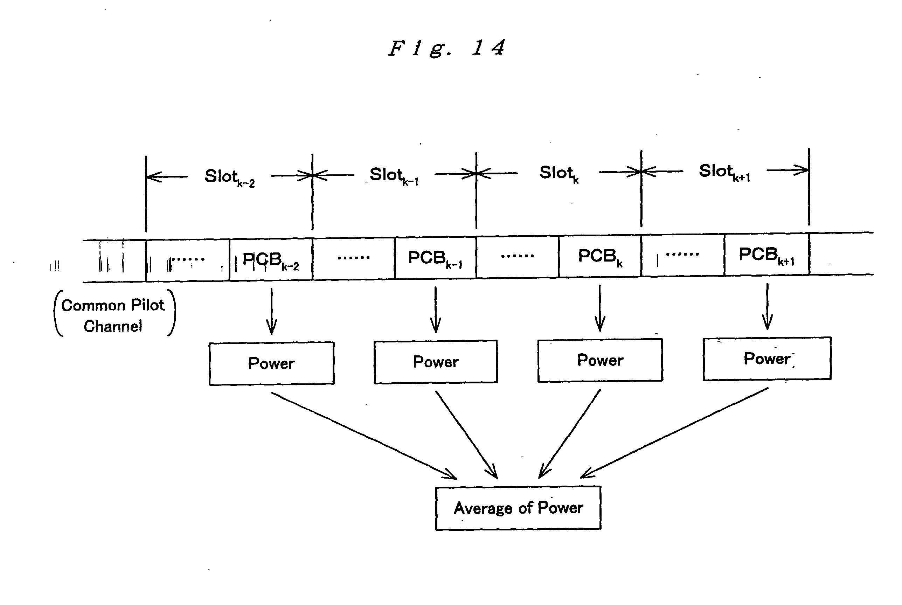

The power averaging portion 25₁' calculates power of the signal pair (PLI₁, PLQ₁). Then the power average calculator 25₁ performs cyclic integration calculation of the correlation power by using the symbol period to calculate the average power AVP₁ of sampled signal. For example, as shown in Fig. 14, the power averaging portion 25₁' calculates the averaged power (AVP) in 4 slots. The power average calculator 25₁ sends the calculated power average AVP₁ to the memory 26₁ in the delay profile generating portion 26.

On the other hand, the power averaging calculator 25₂' calculates a power of the signal (PLI₂, PLQ₂), similarly to the calculator 25₁'. The power average calculator 25₂' sends the calculated power average AVP₂ to the memory 26₁ in the delay profile generating portion 26.

The delay profile generating portion 26 stores the power average AVP₁ of the sample signal into the memory 26₁ sequentially and generates a delay profile DPF₁ corresponding to the received signal from the antenna A₁ as same as the case of the first embodiment. The delay profile generating portion 26 also stores the power average AVP₂ of the sample signal into the memory 26₂ sequentially and generates a delay profile DPF₂ corresponding to the received signal from the antenna A₂.

The delay profile combining portion 27 synthesizes a delay profile for selecting the multi-path based on the delay profiles DPF₁ and DPF2 corresponding to the antennas A1 and A2. The delay profile combining portion 27 sends the delay profile for selecting the multi-path to the MPU 86 via the MPU bus B2 and the MPU interface 12 as same as the case of the first embodiment. The MPU 86 extracts sampling positions in which the values of the power averages are not smaller than a predetermined threshold value, and calculates path-phase information that is common to the antennas A1 and A2. Then the MPU 86 performs the multi-path selection. As the result of the processing mentioned above, the MPU 86 obtains the multi-path (timing of the multi-path) to be employed in the RAKE-combining.

Subsequently, the MPU 86 sends the multi-path obtained as mentioned above to the control channel receiving portion 4 and the traffic channel receiving portion 6 as the multi-path to be employed in the RAKE-combining. The control channel receiving portion 4 and the traffic channel receiving portion 6 performs the RAKE-combining for the received signal depending on the timing corresponding to the multi-path received from the MPU 86.

A path search, which uses the dedicated pilot block DPB in the second embodiment, will be described. In case of the path search using the dedicated pilot block DPB, the MPU 86 sends instruction to use the dedicated pilot block DPB to both the de-spreading portion 22 and the coherent portion 23 by using of the select instruction signal SMC via the MPU interface 12 and the MPU bus B2.

In this situation, when the path search portion 3 receives the received signal pair (RDI, RDQ), the signal pair (RDI, RDQ) is buffered into the input buffer 21 to be output to the de-spreading portion 22. In the de-spreading portion 22 which received the received signal pair (RDI, RDQ), the matched filter 31 calculates correlation between the received signal pair (RDI, RDQ) and the de-spreading code signal pair (DSCI, DSCQ) by using the basic timing or the control signal CTRLS2 (the slot synchronization timing and the frame synchronization timing) sent from the cell search portion 2, similarly to the first embodiment. The de-spreading portion 22 sends the result of the calculation to obtain the correlation, the de-spread signal pair (ISI, ISQ), to the coherent portion 23.

In the coherent portion 23 which received the de-spread signal pair (ISI, ISQ), the complex product calculating portion 23₁ calculates a complex product-sum of the de-spread signal pair (ISI, ISQ) and the signal pair (DCPI₁, DCPQ₁). In the coherent portion 23, the complex product calculating portion 23₂ also calculates a complex product-sum of the de-spread signal pair (ISI, ISQ) and the signal pair (DCPI₂, DCPQ₂). The first extracting portion 23₁ sends the result of the calculation to be obtain the complex product-sum for the antenna A1, the signal pair (PLI₁, PLQ₁), to the power averaging portion 25₁', and the second signal extracting portion 232 sends the result of the calculating to obtain the complex product-sum for the antenna A2, the signal pair (PLI₂, PLQ₂), to the power averaging portion 25₂'.

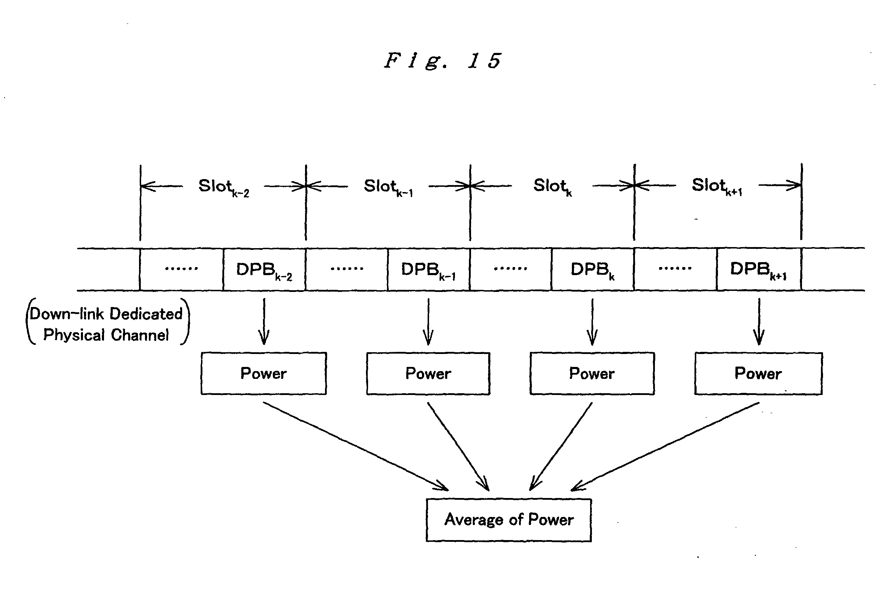

The power averaging portion 25₁' calculates power of the signal pair (PLI₁, PLQ₁). Then the power averaging portion 25₁' performs cyclic integration calculation of the correlation power by using the symbol period to calculate the averaged power of sampled signal. For example, as shown in Fig. 15, the power averaging,portion 25₁' calculates the average power (AVP) in 4 slots. The power averaging portion 25₁' sends the calculated power average AVP₁ to the memory 26₁ in the delay profile generating portion 26.

On the other hand, the power averaging portion 252' calculates power of the signal pair (PLI₂, PLQ₂) similarly to the case of the power averaging portion 25₁'. The power average calculator 252' sends the calculated power average AVP₂ to the memory 262 in the delay profile generating portion 26.

The delay profile generating portion 26, similarly to the case of the first embodiment, stores the power average AVP₁ of the sample signal into the memory 26₁ sequentially and generates a delay profile DPF₁ corresponding to the received signal from the antenna A₁ as same as the case of the path search using the partial common pilot block. The delay profile generating portion 26 also stores the power average AVP₂ of the sample signal into the memory 26₂ sequentially and generates a delay profile DPF₂ corresponding to the received signal from the antenna A₂.

The delay profile combining portion 27, as same as the case of the first embodiment, synthesizes a delay profile for selecting the multi-path based on the delay profiles DPF₁ and DPF₂ corresponding to the antennas A1 and A2 similarly to the case of the path search using the partial common pilot block. The delay profile combining portion 27 reports the delay profile for selecting the multi-path to the MPU 86 as same as the case of the first embodiment. The MPU 86 performs the multi-path selection to obtain the multi-path (timing of the multi-path) to be employed in the RAKE-combining similarly to the case of the first embodiment.

Subsequently, the MPU 86 sends the multi-path obtained as mentioned above to the control channel receiving portion 4 and the traffic channel receiving portion 6 as the multi-path to be employed in the RAKE-combining. The control channel receiving portion 4 and the traffic channel receiving portion 6 performs the RAKE-combining for the received signal depending on the timing corresponding to the multi-path received from the MPU 86.

As described above, the coherent portion 23 calculate the complex product between the de-speared signal obtained by the de-spreading portion 22 and each of the complex conjugate patterns assigned to the antennas A1 and A2 respectively, and separates the pilot block in the de-spread signal into a pilot block part corresponding to the antenna A1 and a pilot block part corresponding to the antenna A2. The delay profile generating portion 26 respectively generates the delay profiles for the signals transmitted from the antennas A1 and A2, which are generated by using the separated signals, and then the delay profile combining portion 27 synthesizes the delay profiles to obtain the delay profile for selecting the multi-path. Subsequently, the MPU 86 performs multi-path selection based on the delay profile for selecting the multi-path. According to the second embodiment of the present invention, the path search is performed accurately in the DS-CDMA system which employs the transmit diversity.

Furthermore, since the cellular phone 100 comprises the path search portion 3 which performs the path search with high accuracy, RAKE-receiving based on the result of the path search with high accuracy improves the quality of the receive processing for the cellular phone 100 as same as the case of the first embodiment.

In the second embodiment, the path search portion 3 can perform the path search serially, wherein either of the partial common pilot block or the dedicated pilot block is solely used during path search, or is alternatively used by turning off the pilot block which is not used, depending on time.

In addition, when resource from the de-spreading portion 22 to the delay profile generating portion is provided for every path search using the partial common pilot block or the path search using the dedicated pilot block, the path search using the partial common pilot block and the path search using the dedicated pilot block can be performed in parallel similarly to the case of the first embodiment.

Moreover, the path search can be performed by using the entire or the part of the common pilot block as same as the first embodiment, and the path search can be performed the entire or the part of the dedicated pilot block similarly to the case of the first embodiment.

Furthermore, the de-spreading portion 22 may comprise a plurality of correlators instead of the matched filter as same as the case of the first embodiment.

Moreover, the DSP 87 can perform the multi-path selection similarly to the case of the first embodiment.

### INDUSTRIAL APPLICABILITY

The path search method and the path search unit of the present invention can perform path search precisely in the DS-CDMA system which employs the transmit diversity. Therefore, the path search method and the path search unit are adaptive to use for a mobile station under multi-path environment in DS-CDMA system employing the transmit diversity.

The mobile terminal of the present invention can receives with high quality because the mobile terminal can performs the RAKE-combining based on the result of the precise path search performed by the path search unit of the present invention.

## Claims

1. A path search method for performing a path search based on received signals obtained by receiving a plurality of signals which include respective spread signals and are transmitted from a plurality of transmitting antennas to which complex type of pilot patterns are assigned individually, the pilot patterns being orthogonal with respect to each other, said method comprising the steps of:
de-spreading the received signal based on a spreading code for generating a spread signal to obtain a de-spread signal;
separating the de-spread signal into a plurality of signals, each of which includes a pilot block respectively corresponding to the transmitting antenna, by calculating a complex product between the de-spread signal and complex conjugate pattern of each of the pilot patterns;
generating delay profiles of the plurality of signals transmitted from the transmitting antennas based on the separated signals, respectively;
combining into a delay profile for multi-path selection based on the generated delay profiles; and
performing the multi-path selection based on the delay profile for the multi-path selection.

2. A path search method according to claim 1, wherein
the pilot block includes at least a part of a dedicated pilot block included in each slot on a dedicated physical channel.

3. A path search method according to claim 1, wherein
the pilot block includes at least a part of a common pilot block included in each slot on a common pilot channel, the common pilot channel being commonly used by every base station.

4. A path search method according to claim 1, wherein
the pilot block includes at least part of a dedicated pilot block included in each slot on a dedicated physical channel and at least a part of a common pilot block included in each slot on a dedicated physical channel, the common pilot channel being commonly used in every base station, and
generation of the delay profiles using the dedicated pilot block and generation of the delay profiles using the common pilot block is performed sequentially.

5. A path search method according to claim 1, wherein
the pilot block includes at least part of a dedicated pilot block included in each slot on a dedicated physical channel and at least part of a common pilot block included in each slot on a dedicated physical channel, the common pilot channel being commonly used in every base station, and
generation of the delay profiles using the dedicated pilot block and generation of the delay profiles using the common pilot block is performed in parallel.

6. A path search method according to any one of claims 1 to 5, wherein the delay profiles generating step comprises the steps of:
performing coherent-adding for amplitudes of an in-phase component in each of the separated signals at sampling points existing in a plurality of subsequent slots, and performing coherent-adding for amplitudes of a quadrature component in each of the separated signals at the sample points existing in the plurality of subsequent slots, the sampling points being periodically arranged at symbol period in the pilot blocks;
calculating signal power of result obtained by using the coherent-adding;
calculating an average value of the signal power using the symbol period; and
generating the delay profile shapes based on the average value of the signal powers, and
the multi-path selection performing step comprises the steps of:
extracting sample positions at which the average values of the signal power are not less than a predetermined threshold value in the delay profile for the multi-path selection; and
calculating path-phase information based on the extracted sample positions.

7. A path search method according to any one of claims 1 to 5, wherein the delay profile generating step comprises the steps of:
calculating signal power at each of sample positions in the pilot blocks which exists in each of the separated signals, the sampling points being periodically arranged at symbol period in the pilot blocks; and
calculating average value of the signal powers at the sampling points existing in the plurality of subsequent slots; and
generating the delay profile shapes based on the average value of the signal powers, and
the multi-path selection performing step comprising the steps of:
extracting sample positions at which the average values of the signal power are not less than a predetermined threshold value in the delay profile for the multi-path selection; and
calculating path-phase information based on the extracted sample positions.

8. A path search unit for performing a path search based on received signals obtained by receiving a plurality of signals which include respective spread signal and are transmitted from a plurality of transmitting antennas to which complex type of pilot patterns are assigned individually, the pilot patterns being orthogonal with respect to each other, said unit comprising:
de-spreading means for de-spreading the received signal based on a spread code for use in generating a spread signal to obtain a de-spread signal;
separating means for separating the de-spread signal into a plurality of signals, each of which includes a pilot block respectively corresponding to the transmitting antenna, by calculating a complex product of the de-spread signal and complex conjugate pattern of each of the pilot patterns;
delay profile generating means for generating delay profiles of said plurality of signals transmitted from the transmitting antennas using the separated signals, respectively;
delay profile combining means for combining into a delay profile for multi-path selection based on the generated delay profiles; and
multi-path selection means for performing the multi-path selection based on the delay profile for the multi-path selection.

9. A path search unit according to claim 8 wherein the delay profile generating means further comprises:
coherent-adding means for performing coherent-adding for amplitudes of in-phase component in each of the separated signals at sampling points existing in a plurality of subsequent slots, and performing coherent-adding for amplitudes of quadrature component in each of the separated signals at the sample points existing the plurality of subsequent slots, the sampling points being periodically arranged at symbol period in the pilot blocks;
signal power calculating means for calculating signal power of a result obtained by using the coherent-adding;
average calculating means for calculating average value of the signal power using the symbol period; and
delay profile shape generating means for generating the delay profiles based on the average value of the signal power, and
the multi-path selection means further comprises:
extracting means for extracting sample positions at which the average values of the signal power are not less than a predetermined threshold value in the delay profile for the multi-path selection; and
path-phase calculating means for calculating path-phase information based on the extracted sample positions.

10. A path search unit according to claim 8, wherein the delay profile generating means further comprises:
signal power calculating means for calculating signal powers at sampling points in the pilot block which exists in each of the separated signals, the sampling points being periodically arranged at symbol period in the pilot blocks;
average calculating means for calculating an average value of the signal powers at the sampling points existing in a plurality of subsequent slots, the sampling positions being periodically arranged at the symbol period in the pilot blocks; and
delay profile shape generating means for generating the delay profiles based on the average value of the signal powers, and
the multi-path selection means further comprises:
extracting means for extracting sampling positions at which the average values of the signal powers are not less than a predetermined threshold value in the delay profile for the multi-path selection; and
path-phase calculating means for calculating path-phase information based on the extracted sample positions.

11. A mobile terminal comprising:
receiving means for receiving signals transmitted from a base station; and
a path search unit according to any one of claim 8 to 10 for performing a path search based on the signals received by the receiving means.
